(19) Europäisches Patentamt
European Patent Office
Office européen des brevets

(11) **EP 4 071 111 A1**

(12) **EUROPEAN PATENT APPLICATION**
published in accordance with Art. 153(4) EPC

(43) Date of publication:
**12.10.2022 Bulletin 2022/41**

(21) Application number: **20896394.2**

(22) Date of filing: **02.12.2020**

(51) International Patent Classification (IPC):
**C01B 21/06** (2006.01)    **C01B 21/064** (2006.01)
**C01B 21/068** (2006.01)    **C01B 21/072** (2006.01)

(52) Cooperative Patent Classification (CPC):
**C01B 21/06; C01B 21/064; C01B 21/068;**
**C01B 21/072;** Y02P 20/10

(86) International application number:
**PCT/JP2020/044937**

(87) International publication number:
**WO 2021/112146 (10.06.2021 Gazette 2021/23)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **05.12.2019 JP 2019220569**

(71) Applicant: **Tokuyama Corporation**
**Shunan-shi, Yamaguchi 745-8648 (JP)**

(72) Inventors:
• **WAKAMATSU, Satoru**
  **Shunan-shi, Yamaguchi 745-8648 (JP)**
• **AKIMOTO, Koji**
  **Shunan-shi, Yamaguchi 745-8648 (JP)**

(74) Representative: **Gerauer, Marc Philippé**
**Kraus & Weisert**
**Patentanwälte PartGmbB**
**Thomas-Wimmer-Ring 15**
**80539 München (DE)**

(54) **METHOD FOR PRODUCING METAL NITRIDE**

(57) The present invention relates to a method for producing a metal nitride by igniting a raw material powder containing a metal powder filled in a reaction vessel under a nitrogen atmosphere and propagating nitriding combustion heat generated by a nitriding reaction of the metal to the whole raw material powder, the method including forming a heat insulating layer made of a material having nitrogen permeability and inert to the nitriding reaction on an upper surface of a layer made of the raw material powder. According to the present invention, it is possible to provide a method for reducing the amount of unreacted metal powder when producing a metal nitride by a combustion synthesis method.

Fig. 1

**Description**

Technical Field

The present invention relates to a method for producing a metal nitride.

Background Art

Metal nitrides such as silicon nitride, aluminum nitride, and boron nitride have attracted attention as ceramic raw materials for various industrial materials because sintered bodies thereof generally have excellent properties such as high thermal conductivity, high insulating properties, and high strength.

As a method for producing a metal nitride, various methods such as a direct nitriding method and a reduction nitriding method are known. For example, in the case of silicon nitride, there are known a reduction nitriding method (for example, PTL 1) in which silicon nitride is formed by flowing nitrogen gas in the presence of carbon powder using silica powder as a raw material, a direct nitriding method (for example, PTL 2) in which metal silicon (silicon powder) and nitrogen are reacted at a high temperature, and an imide decomposition method in which silicon halide and ammonia are reacted.

Further, a method of synthesizing a metal nitride by a direct nitriding method using a self-propagating high temperature synthesis (SHS method, hereinafter also referred to as a combustion synthesis method) is also known. The self-propagating high temperature synthesis is also called a combustion synthesis method, and is a synthesis method in which a raw material powder containing metal powder such as silicon powder, aluminum powder, or boron powder is introduced into a reaction vessel, a part of the raw material powder is ignited by strong heat under a nitrogen atmosphere to cause a nitriding reaction, and nitriding combustion heat generated by the nitriding reaction is propagated to the surroundings to cause the whole to react.

For example, PTL 3 describes that a carbon crucible filled with a metal powder is placed in a reaction vessel, the surface of the metal powder is irradiated with a YAG laser in a pressurized nitrogen atmosphere to be ignited, and then a combustion synthesis reaction is performed by self-heating to obtain a product of fine powder.

Since the combustion synthesis method does not require an external heating means other than ignition for starting the reaction, the equipment can be simplified and the input energy can be reduced. Further, since the reaction itself is an exothermic reaction similar to that of the direct nitriding method, the reaction temperature tends to be high, so that the produced metal nitride is fused and obtained as a massive material. The metal nitride obtained as a massive material needs to be pulverized or disintegrated separately. As described above, in the combustion synthesis method, since the reaction rapidly proceeds and the reaction temperature tends to be high, the fusion of the metal nitride excessively proceeds to make it difficult to form a dense sintered body, or the metal powder as a raw material is melted and fused to leave a large amount of unreacted material in some cases. Therefore, there is also disclosed a technique in which a diluent is used to cause a combustion reaction to proceed mildly (PTL 4).

Citation List

Patent Literature

PTL 1: JP 2009-161376 A
PTL 2: JP 10-218612 A
PTL 3: JP 2000-264608 A
PTL 4: WO2018/110565 A

Summary of Invention

Technical Problem

However, in the combustion synthesis method described above, a certain amount of unreacted metal powder as a raw material remains regardless of whether or not a diluent is used. Therefore, the yield of the metal nitride is deteriorated, the purity is lowered, and there is a concern that the performance of the sintered body of the metal nitride is also lowered due to containing a large amount of unreacted metal powder. Among the metal nitrides, particularly in the case of producing silicon nitride, since the reactivity between silicon and nitrogen gas is low, the problem that unreacted metal powder remains is remarkable.

Solution to Problem

As a result of studies on such a problem that unreacted metal powder remains, the present inventors have found that unreacted metal powder specifically remains on the surface of a massive material formed particularly on the uppermost portion among massive materials of metal nitride produced in a reaction vessel. Then, the present inventors predicted that since the difference between the surface temperature of the raw material powder layer containing the metal powder in the reaction vessel and the temperature of the atmosphere is large and the surface temperature of the raw material powder does not rise sufficiently, the nitriding reaction is difficult to proceed, and as a result, unreacted metal powder may remain on the surface of the massive material.

As a result of further studies based on the above findings and predictions, the present inventors have found that the amount of the unreacted material can be reduced by forming a heat insulating layer on the surface of the raw material powder layer to prevent a decrease in the temperature of the surface of the raw material powder layer in the reaction vessel, and have completed the present invention.

The gist of the present invention is the following [1] to [7].

[1] A method for producing a metal nitride by igniting a raw material powder containing a metal powder filled in a reaction vessel under a nitrogen atmosphere and propagating nitriding combustion heat generated by a nitriding reaction of the metal to the whole raw material powder, the method including forming a heat insulating layer made of a material having nitrogen permeability and inert to the nitriding reaction on an upper surface of a layer made of the raw material powder.

[2] The method for producing a metal nitride as set forth in [1], wherein the heat insulating layer is formed of a nitride powder of the same metal element as the metal powder.

[3] The method for producing a metal nitride as set forth in [1] or [2], wherein the raw material powder contains a diluent composed of a nitride powder of the same metal element as the metal powder.

[4] The method for producing a metal nitride as set forth in any one of [1] to [3], wherein the metal powder is a silicon powder.

[5] The method for producing a metal nitride as set forth in any one of [1] to [4], further including forming a protective layer made of a material inert to a nitriding reaction on at least one surface constituting an inner wall of the reaction vessel.

[6] The method for producing a metal nitride as set forth in [5], wherein the protective layer is formed on a bottom surface of the reaction vessel.

[7] The method for producing a metal nitride as set forth in [5] or [6], wherein the protective layer is formed on a side surface of the reaction vessel.

Advantageous Effects of Invention

According to the present invention, it is possible to provide a method capable of reducing the amount of unreacted metal powder when producing the metal nitride by the combustion synthesis method.

Brief Description of Drawings

Fig. 1 is a cross-sectional view illustrating an embodiment of a method for producing a metal nitride according to the present invention.
Fig. 2 is a cross-sectional view illustrating another embodiment of the method for producing a metal nitride according to the present invention.
Fig. 3 is a cross-sectional view illustrating another embodiment of the method for producing a metal nitride according to the present invention.
Fig. 4 is a cross-sectional view illustrating another embodiment of the method for producing a metal nitride according to the present invention.
Fig. 5 is a cross-sectional view illustrating another embodiment of the method for producing a metal nitride according to the present invention.
Fig. 6 is a cross-sectional view illustrating another embodiment of the method for producing a metal nitride according to the present invention.
Fig. 7 is a cross-sectional view illustrating another embodiment of the method for producing a metal nitride according to the present invention.
Fig. 8 is a cross-sectional view illustrating another embodiment of the method for producing a metal nitride according to the present invention.

Description of Embodiments

<Method for Producing Metal Nitride>

The present invention is a method for producing a metal nitride by igniting a raw material powder containing a metal powder filled in a reaction vessel under a nitrogen atmosphere and propagating nitriding combustion heat generated by a nitriding reaction of the metal to the whole raw material powder, the method including forming a heat insulating layer made of a material having nitrogen permeability and inert to the nitriding reaction on an upper surface of a layer made of the raw material powder. After the heat insulating layer is formed, the raw material powder is ignited to produce a metal nitride by a combustion synthesis method, whereby the amount of unreacted metal powder can be reduced.

Examples of the metal powder used as a raw material in the present invention include a silicon powder, an aluminum powder, and a boron powder. Depending on the type of the metal powder, a metal nitride can be obtained, such as silicon nitride ($Si_3N_4$) if the metal powder is a silicon powder, aluminum nitride (AlN) if the metal powder is an aluminum powder, and boron nitride (BN) if the metal powder is a boron powder.

Although the details will be described later, the metal nitride obtained by the combustion synthesis method is usually obtained as a massive material, and the massive material is pulverized into a powdery metal nitride, which is then fired to obtain a sintered body.

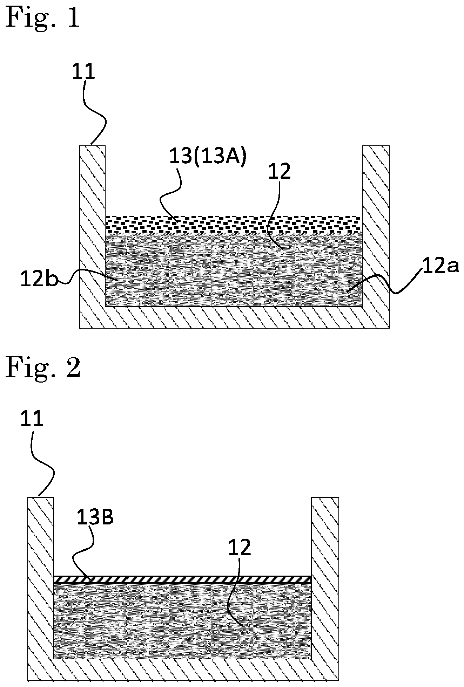

Fig. 1 is a cross-sectional view schematically showing an embodiment of a method for producing a metal nitride according to the present invention. Specifically, Fig. 1 is a cross-sectional view showing an embodiment in which a raw material powder containing a metal powder is reacted in a reaction vessel. Note that the present invention is not limited to the contents of the drawings. A reaction vessel 11 is filled with a raw material powder containing a metal powder to form a layer 12 made of the raw material powder (hereinafter also referred to as a raw material powder layer 12).

The reaction vessel 11 is installed in a closed reactor (not shown), and the inside of the reactor is adjusted to a nitrogen atmosphere when combustion synthesis is performed. The reaction vessel 11 is a heat-resistant vessel, and for example, a vessel made of carbon can be suitably used. By igniting one end 12a of the raw material powder layer 12 filled in the reaction vessel 11, the nitriding reaction of the metal powder contained in the raw material powder is started, and the nitriding combustion heat generated by the nitriding reaction is propagated to the whole raw material powder toward another end 12b to generate the metal nitride. Here, examples of the metal powder preferably include a silicon powder, an aluminum powder, and a boron powder, and examples of the metal nitride include a nitriding reaction product of the metal powder, such as silicon nitride, aluminum nitride, and boron nitride. Note that the raw material powder may contain a diluent in addition to the metal powder as described later in order to make the nitriding reaction proceed more mildly.

(Heat Insulating Layer)

In the present invention, a heat insulating layer 13 is formed on the upper surface of the raw material powder layer 12. By forming the heat insulating layer 13 on the upper surface of the raw material powder layer 12, it is possible to prevent a decrease in the temperature of the surface of the raw material powder layer 12, facilitate the progress of the nitriding reaction, and reduce the amount of unreacted material of the metal powder.

In particular, when silicon nitride is produced using silicon as the metal powder, the reaction temperature becomes high (about 1500 to 2500°C), and thus the temperature difference between the surface of the raw material powder layer 12 and the inside of the layer becomes large, and there is a tendency for more unreacted material of the metal powder to be generated on the surface. Therefore, in the case where silicon nitride is produced using silicon as the metal powder by utilizing the combustion synthesis method, the effect of the present invention can be more remarkably exhibited.

The heat insulating layer 13 only needs to be formed on the upper surface of the raw material powder layer 12, and may be formed in close contact with the raw material powder layer 12 or may be formed with a gap between itself and the raw material powder layer 12. From the viewpoint of effectively suppressing a decrease in the temperature of the surface, the heat insulating layer 13 is preferably formed in close contact with the raw material powder layer 12. When there is a gap between the raw material powder layer 12 and the heat insulating layer 13, the gap is preferably equal to or less than 10 mm, and more preferably equal to or less than 5 mm.

Here, the heat insulating layer 13 is made of a material which has nitrogen permeability and is inert to a nitriding reaction. By having the nitrogen permeability, the nitrogen gas is not blocked by the heat insulating layer 13, so that the nitriding reaction of the raw material powder present in the lower part of the heat insulating layer 13 is not inhibited. Having nitrogen permeability means that nitrogen permeates at least to an extent that does not inhibit the nitriding reaction of the raw material powder. For example, in a case where the heat insulating layer is formed of powder as described later, in a case where the heat insulating layer is a porous plate, or in a case where felt or cloth is used, the heat insulating layer has nitrogen permeability.

In addition, since the heat insulating layer 13 is made of a material inert to the nitriding reaction, it is possible to prevent deterioration of the heat insulating layer 13 and prevent impurities derived from the reaction product of the heat insulating layer 13 from being mixed into the metal nitride which is the object to be produced.

The heat insulating layer 13 may be in any form such as a fibrous form, a powder form, or a plate form as long as it has the above-described properties, and the material thereof is not particularly limited, and may be made of metal or ceramic. In particular, the heat insulating layer 13 is preferably formed of a nitride powder of the same metal element as the metal powder contained in the raw material powder. Specifically, the heat insulating layer 13 is preferably formed of silicon nitride when the metal powder as a raw material is a silicon powder, or aluminum nitride when the metal powder is an aluminum powder, or boron nitride when the metal powder is a boron powder. Thus, the raw material powder is subjected to a nitriding reaction to form a metal nitride, and then a post-process such as pulverization or sintering can be performed together with the heat insulating layer without removing the heat insulating layer. Of course, the heat insulating layer formed of a nitride powder of the same metal element as the metal powder corresponds to a heat insulating layer made of a material inert to the nitriding reaction. Therefore, deterioration of the heat insulating layer is prevented, and mixing of impurities derived from the heat insulating layer into the produced metal nitride is prevented.

The heat insulating layer 13 may be formed on at least a part of the upper surface of the raw material powder layer 12, but from the viewpoint of enhancing the heat insulating effect, the heat insulating layer 13 is preferably formed so as to cover preferably 90% or more, and more preferably 95% or more of the surface area of the raw material powder layer 12, and particularly preferably formed so as to cover the entire surface of the raw material powder layer 12.

The thickness of the heat insulating layer 13 is preferably appropriately adjusted depending on the form of the heat insulating layer, such as whether the heat insulating layer 13 is formed of powder or has a plate shape, and is, for example, 5 to 30 mm, and preferably 10 to 30 mm. When the thickness is the above lower limit value or more, the heat insulating effect is enhanced, and when it is the above upper limit value or less, the nitrogen permeability becomes good.

Examples of the heat insulating layer 13 include a heat insulating layer 13A formed of powder, a plate-shaped heat insulating layer 13B, and a heat insulating layer 13C formed of a porous plate. These will be individually described below.

As shown in Fig. 1, the heat insulating layer 13 is preferably a heat insulating layer 13A formed of powder. By forming the heat insulating layer from powder, nitrogen permeability can be easily imparted, and the nitriding reaction of the raw material powder present in the lower portion of the heat insulating layer can be made to easily proceed. The powder forming the heat insulating layer 13A may be in a powder form or a granular form. The average particle diameter of the powder is not particularly limited, but is preferably 0.1 to 100 $\mu$m, and more preferably 0.5 to 20 $\mu$m. The average particle diameter means a particle size (average particle diameter D50) at which a cumulative curve of a particle size distribution measured by a particle size distribution measurement apparatus using a laser diffraction/scattering method becomes 50%.

The bulk density of the heat insulating layer 13A formed of the powder is preferably 0.3 to 1. 5 g/cm$^3$, and more preferably 0.3 to 1 g/cm$^3$, from the viewpoint of improving both the heat insulating property and the nitrogen permeability.

In addition, since the heat insulating layer 13 formed of the powder has high nitrogen permeability, the heat insulating layer 13 can be formed to be relatively thick, and accordingly, the heat insulating effect can be enhanced. From such a viewpoint, the thickness of the heat insulating layer 13 formed of the powder is, for example, 5 to 30 mm, and preferably 10 to 30 mm.

As shown in Fig. 2, the heat insulating layer may be a plate-shaped heat insulating layer 13B. The plate-shaped heat insulating layer 13B is easy to be provided on the upper surface of the raw material powder layer 12 and to be removed after the nitriding reaction, and is excellent in handleability. As the plate-shaped heat insulating layer 13B, for example, a sintered body formed by firing a powder of metal nitride can be used.

In Fig. 2, the plate-shaped heat insulating layer 13B is formed of one plate-shaped molded body, but the present invention is not limited thereto, and for example, a plurality of plate-shaped molded bodies having a smaller size may be prepared and arranged to form the plate-shaped heat insulating layer 13B.

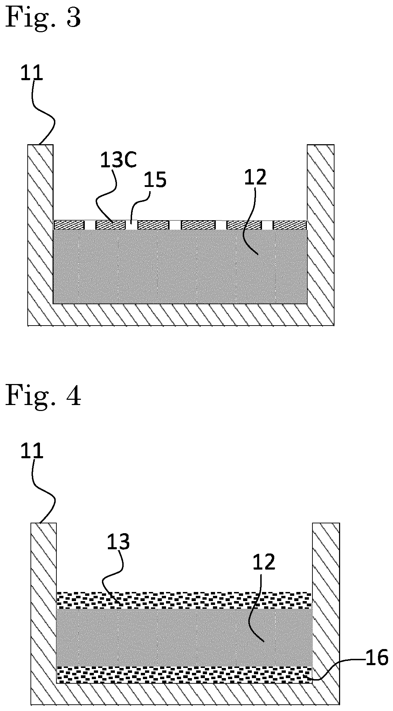

As shown in Fig. 3, the heat insulating layer may be a heat insulating layer 13C made of a porous plate. The porous plate shown in Fig. 3 is provided with a plurality of holes 15 communicating from one surface of the plate to the other surface thereof, and therefore has excellent nitrogen permeability. The shape of the hole 15 is not particularly limited, and examples of the cross-sectional shape of the hole 15 include a circle, an ellipse, and a polygon such as a quadrangle.

Further, if the porous plate has nitrogen permeability, it can be used as a heat insulating layer, and therefore, a porous sintered body can be used as the porous plate. The porous sintered body has a plurality of pores, and the nitrogen permeability can be adjusted by the porosity.

The apparent porosity of the porous plate is preferably 50 to 80%, and more preferably 60 to 75%. When the apparent porosity of the porous plate is these lower limits or more, the nitrogen permeability is enhanced, and when it is these upper limits or less, the heat insulating property of the heat insulating layer can be secured to a certain degree or more.

The apparent porosity can be measured by the Archimedes method using water, and can be obtained by the following equation, where W1 is the dry weight of the porous plate, W2 is the weight of the porous plate in water, and W3 is the weight of the porous plate in air when water is added to the porous plate and excess water on the surface is removed.

$$\text{Apparent porosity (\%)} = 100 \times (\text{W3} - \text{W1})/(\text{W3} - \text{W2})$$

(Protective Layer)

In the present invention, it is preferable to form a protective layer on at least one surface constituting the inner wall of the reaction vessel. As a result, deterioration of the reaction vessel can be suppressed, and a side reaction between the material constituting the reaction vessel and the raw material powder can be prevented. In addition to this, by forming the protective layer, it is possible to further reduce unreacted materials of the metal powder.

The protective layer 16 is formed of a material inert to the nitriding reaction. The protective layer 16 may be in any form such as a fibrous form, a powder form, or a plate form as long as it has such properties, and the material thereof is not particularly limited, and may be made of metal or ceramic. In particular, the protective layer 16 is preferably formed of a nitride powder of the same element as the metal powder contained in the raw material powder. Thus, after completion of the nitriding reaction, the metal nitride as a product and the protective layer 16 can be pulverized together as they are without being separated from each other to obtain a raw material such as a sintered body.

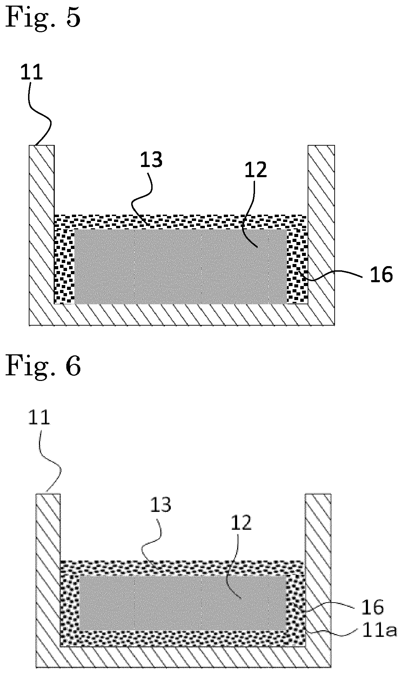

Examples of the mode in which the protective layer is formed on at least one surface constituting the inner wall of the reaction vessel together with the raw material powder layer 12 include a mode in which the protective layer 16 is formed on the bottom surface of the reaction vessel as shown in Fig. 4 and a mode in which the protective layer 16 is formed on the side surface of the reaction vessel as shown in Fig. 5.

In addition, from the viewpoint of more effectively preventing deterioration of the reaction vessel, as shown in Fig. 6, it is preferable to provide a protective layer 16 between both the bottom surface of the reaction vessel and the side surface of the reaction vessel. When the protective layer 16 is provided on the side surface of the reaction vessel, the protective layer 16 may be provided on a part of the side surface of the reaction vessel or may be provided on all the side surfaces of the reaction vessel, but is preferably provided on all the side surfaces of the reaction vessel from the viewpoint of preventing deterioration of the reaction vessel.

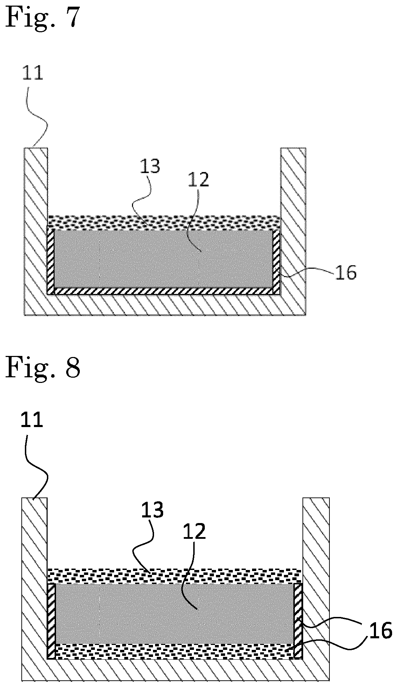

The protective layer may be formed of powder as shown in Figs. 4 to 6, or may be formed of a plate-shaped molded body as shown in Fig. 7. Further, the protective layers do not necessarily have the same form, and for example, as shown in Fig. 8, the protective layer provided on the bottom surface of the reaction vessel may be formed of powder, and the protective layer provided on the side surface of the reaction vessel may be formed of a plate-shaped molded body, or vice versa.

The thickness of the protection layer is preferably 5 to 30 mm, and more preferably 10 to 30 mm. When the thickness of the protective layer is these lower limits or more, deterioration of the reaction vessel can be easily prevented, and when it is these upper limits or less, the volume of the raw material powder in the reaction vessel can be increased and the amount of the obtained metal nitride is increased.

(Raw Material Powder)

In the present invention, the raw material powder includes a metal powder. Examples of the metal powder include a silicon powder, an aluminum powder, and a boron powder. In the present invention, a silicon powder is particularly preferable.

The average particle diameter of the metal powder used as the raw material powder is not particularly limited, but the average particle diameter D50 is preferably in the range of 1 to 100 $\mu$m. When the raw material powder is a silicon powder, the average particle diameter D50 is preferably 1 to 10 $\mu$m, when the raw material powder is an aluminum powder, the average particle diameter D50 is preferably 5 to 100 $\mu$m, and when the raw material powder is a boron powder, the average particle diameter D50 is preferably 5 to 50 $\mu$m.

The metal powder used as the raw material powder is preferably a high-purity metal powder.

For example, when the metal powder is a silicon powder, the contents of Al and Fe are preferably 200 ppm or less, respectively. Further, when the metal powder is an aluminum powder, the contents of Si and Fe are preferably 200 ppm or less, respectively. Furthermore, when the metal powder is a boron powder, the Fe content is preferably 200 ppm or less. When such a metal element is present, the sinterability of the obtained metal nitride may decrease, and characteristics such as the strength of the obtained sintered body may decrease. For the same reason, it is preferable that the content of high melting point metals such as W and Mo is 200 ppm or less.

The surface of the metal powder is preferably oxidized to an appropriate degree. This is because the oxide film formed on the surface of the metal powder is an important factor for appropriately controlling the progress of the combustion synthesis reaction. As a method for oxidizing the surface of the metal powder to an appropriate degree, a method of pulverizing the metal powder to the above-described particle size range in air is conveniently adopted. For example, a jet mill using air is preferably adopted. The degree of oxidation of the metal powder may be appropriately determined within a range that does not inhibit the combustion synthesis reaction of the present invention, but oxygen is preferably contained in an amount of about 0.1 to 1% by mass with respect to the weight of the metal powder. When the amount of oxygen in the metal powder is less than the above range, the combustion temperature tends to be excessively high during the nitriding reaction, and when the amount of oxygen is more than the above range, the nitriding reaction tends to be suppressed, which may cause problems such as ignition failure and residual unreacted metal.

In the present invention, the above-described metal powder used as the raw material powder may be obtained in any manner, but it is preferable that the purity and the particle diameter are adjusted to the above-described predetermined ranges. For example, when the metal powder is a silicon powder, it is generally economical to recover and use fine powder produced in the process of crushing a semiconductor polycrystalline silicon rod to produce a nugget.

The raw material powder may contain a diluent. Since the reaction between the metal powder and nitrogen is an exothermic reaction and the surface reaction is a rate-controlling reaction, it becomes more difficult to control the temperature of the raw material powder as the amount of the metal powder increases. However, since the raw material powder contains the diluent, the content of the metal powder in the raw material powder is reduced, and the heat generation of the raw material powder is also reduced. This facilitates the control of the temperature of the raw material powder.

In order not to remove the diluent contained in the raw material powder from the produced metal nitride after the metal powder has reacted to produce the metal nitride, the diluent is preferably a nitride powder of the same metal element as the metal powder. For example, when the metal powder is a silicon powder, the diluent contained in the raw material powder is preferably silicon nitride; when the metal powder is an aluminum powder, the diluent contained in the raw material powder is preferably aluminum nitride; and when the metal powder is a boron powder, the diluent contained in the raw material powder is preferably boron nitride. As the diluent, for example, a metal nitride produced by the method for producing a metal nitride of the present invention can be used.

When the diluent is contained in the raw material powder, the content of the diluent may be, for example, about 5 to 80% by mass based on the total amount of the raw material powder.

The content of the diluent is preferably appropriately adjusted depending on the type of the raw material powder. For example, when the raw material powder is a silicon powder, the content of the diluent is preferably 5 to 50% by mass, and more preferably 10 to 30% by mass based on the total amount of the raw material powder. When the raw material powder is an aluminum powder or a boron powder, the content of the diluent is preferably 10 to 80% by mass, and more preferably 30 to 80% by mass based on the total amount of the raw material powder. When the content of the diluent is these lower limits or more, heat generation of the raw material powder is reduced, and temperature control becomes easy. When the content of the diluent is these upper limits or less, the nitriding combustion heat of the metal can be easily propagated to the whole raw material powder filled in the reaction vessel.

The raw material powder may contain other components in addition to the metal powder and the diluent used as necessary as long as the effects of the present invention are not impaired. Examples of the other components include chlorides such as sodium chloride and ammonium chloride, and oxides such as calcium oxide, yttrium oxide, and magnesium oxide. The content of the other components is preferably 10% by mass or less, more preferably 5% by mass or less, still more preferably 1% by mass or less, and even more preferably 0% by mass based on the total amount of the raw material powder.

(Conditions of Ignition and Combustion Synthesis Method)

The raw material powder described above is filled in a reaction vessel (setter). The reaction vessel is preferably a heat-resistant reaction vessel made of ceramics, graphite, or the like. The bulk density of the raw material powder layer in the reaction vessel is preferably set in a range of 0.3 to 1.0 g/cm$^3$. By performing ignition while adjusting the bulk density to be such a bulk density and allowing the combustion reaction to proceed, the remaining of unreacted materials is suppressed and the entire raw material powder is easily reacted. The bulk density of the raw material powder layer can be adjusted by the average particle diameter of the raw material powder, the nitrogen pressure supplied in the nitrogen substitution, and the like.

In the combustion synthesis method, an ignition agent containing powder of Ti, Al, or the like may be added to a portion serving as an ignition point. Of course, the amount of such an ignition agent should be small enough not to affect the sinterability of the obtained metal nitride. In the case where the ignition agent is disposed, the ignition agent can be disposed at one or a plurality of sites at an end portion, a central portion, or an arbitrary position of the raw material powder layer.

As described above, after the raw material powder is filled in the reaction vessel, the inside of the reaction vessel is replaced with nitrogen, and the raw material powder is ignited under a nitrogen atmosphere.

In general, the reaction vessel is placed in a pressure-resistant closed reactor having an ignition device and a gas supply/discharge mechanism, the pressure in the reactor is reduced to remove air, and then nitrogen gas is supplied to perform nitrogen substitution.

In the present invention, the reaction may be carried out under ordinary pressure or under applied pressure, but is preferably carried out under applied pressure. In particular, when a reaction for obtaining silicon nitride as a metal nitride is carried out, the reaction is preferably carried out under applied pressure from the viewpoint of facilitating the progress of the nitriding reaction. To be more specific, the reaction is preferably carried out at a pressure of from ordinary pressure to 1 MPa, which is achieved by the nitrogen pressure supplied to the closed reactor.

When the pressure of the closed reactor is lower than the above range, there is a tendency that the amount of unreacted materials increases due to misfire or the like during the reaction, and the yield decreases. On the other hand, when the pressure of the closed reactor is higher than the above range, there is a tendency that the reaction temperature excessively rises to produce coarse silicon massive materials, or the finally obtained silicon nitride powder contains a large amount of coarse particles which are difficult to pulverize, and it becomes difficult to secure an appropriate particle size distribution.

In the present invention, it is preferable to ignite the raw material powder filled in the reaction vessel and directly react the metal powder by self-combustion diffusion in a nitrogen-pressurized state, i.e., under a nitrogen atmosphere of 100 kPaG to 1 MPaG.

The ignition can be performed by a conventionally known method, and for example, ignition by arc discharge using a pair of electrodes attached to a closed reactor, ignition by electrically heating a carbon or metal heater, ignition by laser irradiation, or the like can be adopted.

(Pulverization)

In the present invention, by carrying out the combustion synthesis reaction as described above, a massive product composed of a metal nitride can be obtained. The massive product can be converted into metal nitride particles having an appropriate particle size distribution by mechanical pulverization described later.

In the present invention, a metal nitride powder having an appropriate particle size distribution can be obtained by mechanically pulverizing the massive product obtained by the above combustion synthesis reaction. The mechanical pulverization is preferably performed by a dry method. Wet pulverization using a liquid medium such as water is advantageous in obtaining a fine powder because the pulverization pressure is uniformly applied. However, wet pulverization has low productivity. In addition, the metal nitride and the liquid medium may react with each other to produce impurities, and thus it is necessary to remove the impurities by purification such as acid treatment after pulverization. In addition, since it is necessary to treat the acid-treated waste liquid in order not to increase the environmental load, the cost of pulverization is further increased. Therefore, it is preferable that the massive product obtained by the above reaction of the present invention is pulverized by dry pulverization.

It is also possible to obtain a metal nitride powder having an appropriate particle size distribution by carrying out a plurality of pulverizations of the massive product under different pulverizing conditions, preparing a plurality of types of pulverized products having different particle size distributions, and appropriately mixing the pulverized products. It is also possible to obtain a metal nitride powder having an appropriate particle size distribution by introducing a classification step such as sieving.

Such dry pulverization is performed using a pulverizer such as a vibration mill, a bead mill, or an air flow grinder (jet mill) that causes objects to be pulverized to collide with each other. An obvious way to suppress heavy metal contamination during pulverization is to use a common material of metal nitride as grinding media. For example, air flow grinding using a jet mill is most preferable from the viewpoint of prevention of contamination because pulverization can be performed by collision between powders. In addition, even in a method using a vibration mill or a bead mill, there is no problem of contamination if balls made of metal nitride, which is a common material, are used as grinding media. At this time, since the grinding media are also worn out even though the amount thereof is very small, it is obvious that media with less contamination should be used.

With regard to the production of metal nitride balls for use as grinding media, since a method of obtaining a wear-resistant sintered body by using a metal nitride alone is costly, a method of mixing and sintering a sintering aid such as yttria, magnesia, or alumina can also be adopted in order to produce media at low cost. Selection of these sintering aids does not pose any problem as a method for producing a metal nitride powder for a sintered body as long as components acceptable for the target metal nitride powder are selected. When the metal nitride powder is pulverized by using a vibration mill or a bead mill in a dry method, it is preferable to add a small amount of an alcohol such as ethanol or isopropyl alcohol or water to pulverize the metal nitride powder. Since these components function as a pulverizing aid for promoting pulverization, the pulverization time can be shortened. The pulverizing aid is added in such an amount that the dry state of the pulverized product can be maintained. The amount of the pulverizing aid varies depending on the component thereof, but is preferably in the range of 0.1 to 2% by mass with respect to the metal nitride powder to be pulverized.

(Production of Metal Nitride Sintered Body)

Using the metal nitride powder obtained as described above, a metal nitride sintered body can be produced by a known method.

For example, when the metal nitride powder is a silicon nitride powder, the silicon nitride powder is mixed with a sintering aid such as yttria, magnesia, zirconia, or alumina, press-molded to form a molded body having a bulk density of 1.7 g/cm$^3$ or more, preferably 1.85 g/cm$^3$ or more, and more preferably 1.95 g/cm$^3$ or more, and then fired to obtain a sintered body.

The press molding is typically uniaxial press molding, but a method of performing CIP (Cold Isostatic Pressing) molding after uniaxial press molding is preferably adopted.

The firing is performed under a nitrogen atmosphere at 1700 to 2000°C. The density of the sintered body depends on both the firing temperature and the firing time. For example, in the case of firing at 1700°C, the firing time is about 3 to 20 hours. The firing time and firing time may be appropriately set according to the type of the metal nitride or the like. For example, when silicon nitride is fired at a temperature of 1850°C or higher, if the firing time is too long, the density of the sintered body may decrease due to decomposition of the silicon nitride itself. In this case, decomposition of the silicon nitride sintered body can be suppressed by sintering in an atmosphere pressurized with nitrogen. Although the decomposition of silicon nitride can be suppressed as the nitrogen pressure is higher, a pressure of less than 1 MPa is preferably adopted for economical reasons such as the pressure resistance performance of the apparatus.

In order to obtain a high-density sintered body having a relative density of 99% or more, it is preferable to perform firing under a pressurized nitrogen atmosphere at 1800°C or higher.

The metal nitride sintered body obtained as described above can be suitably used as a substrate material for heat dissipation or the like.

Examples

Hereinafter, the present invention will be described in more detail with reference to Examples, but the present invention is not limited to these Examples.

In the Examples, various physical properties were measured by the following methods.

(1) Measurement of amount of unreacted material

The amount of unreacted material (amount of unreacted silicon) in the silicon nitride powder obtained by pulverizing the massive product produced in each of Examples and Comparative Examples was measured as follows.

A mixed powder of a silicon nitride powder and a silicon powder in which the ratio of the silicon nitride powder and the silicon powder was changed was prepared, an X-ray diffraction pattern of the mixed powder was measured, and then a calibration curve was prepared from the peak intensity ratio of silicon nitride and silicon in the measured X-ray diffraction pattern. Then, the X-ray diffraction patterns of the silicon nitride powders of Examples and Comparative Examples were measured, respectively, and the amount of unreacted material (amount of unreacted silicon) was calculated based on the calibration curve from the peak intensity ratio of silicon nitride and silicon in the measured X-ray diffraction patterns.

(2) Deterioration of reaction vessel

After the same combustion synthesis reaction was performed 20 times in each of Examples and Comparative Examples, deterioration of the reaction vessel was evaluated by visual observation of the bottom surface and the side surface of the reaction vessel according to the following criteria.

A: No deterioration of the reaction vessel was observed.
B: Deterioration was observed on either the side surface or the bottom surface of the reaction vessel.
C: Deterioration was observed on both the side surface and the bottom surface of the reaction vessel.

(3) Particle diameter of silicon nitride powder

(i) Pretreatment of sample

As a pretreatment of a sample silicon nitride powder, the silicon nitride powder was subjected to a firing treatment in air at a temperature of about 500°C for 2 hours. In the above-mentioned firing treatment, in the particle diameter measurement, the surface oxygen amount of the silicon nitride powder may be small, or the particle surface may be covered with a hydrophobic substance by a pulverizing aid or the like at the time of pulverization, and the particle itself may exhibit hydrophobicity. In such a case, dispersion in water may be insufficient, and it may be difficult to measure the particle diameter with reproducibility. Therefore, by subjecting the sample silicon nitride powder to a firing treatment in air at a temperature of about 200°C to 500°C for several hours to impart hydrophilicity to the silicon nitride powder, it becomes easy to disperse the silicon nitride powder in an aqueous solvent, and highly reproducible particle diameter measurement becomes possible. In this case, it has been confirmed that the particle diameter to be measured is hardly affected even if the firing is performed in air.

(ii) Measurement of particle diameter

In a beaker (inner diameter 60 mmφ, height 70 mm) having a marked line of 100 mL at the maximum, 90 mL of water and 5 mL of sodium pyrophosphate having a concentration of 5% by mass were added, and the mixture was stirred well. Then, a sample silicon nitride powder of about one ear pick was charged, and the silicon nitride powder was dispersed by an ultrasonic homogenizer (US-300E manufactured by NIHONSEIKI KAISHA LTD., chip size 26 mm) at 50% AMPLITUDE (about 2 amperes) for 2 minutes.
The dispersion was carried out by inserting the tip of the chip to the position of the marked line of 20 mL of the beaker.
Next, the particle size distribution of the obtained silicon nitride powder dispersion was measured using a laser diffraction/scattering particle size distribution analyzer (Microtrac MT3300EXII manufactured by MicrotracBEL Corporation). As measurement conditions, water (refractive index: 1.33) was selected as a solvent, a refractive index of 2.01 was selected as particle characteristics, permeation was selected as particle permeability, and a non-spherical shape was selected as a particle shape. The particle diameter at which the cumulative curve of the particle size distribution measured by the above-mentioned particle size distribution measurement becomes 50% is defined as an average particle diameter (average particle diameter D50).

(4) β phase ratio

Powder X-ray diffraction (XRD) measurement using CuKα radiation was performed, and the weight ratio of the α phase and the β phase of the silicon nitride powder was calculated by the method described in C. P. Gazzara and D. R. Messier: Ceram. Bull., 56 (1977), 777-780.

(5) BET specific surface area

The specific surface area of the produced silicon nitride powder was measured using a BET method specific surface area measurement apparatus (Macsorb HM model-1201), manufactured by Mountech Co., Ltd., and using a single point BET method by nitrogen gas adsorption.
Prior to the measurement of the specific surface area described above, the silicon nitride powder to be measured was subjected to heat treatment in air at 600°C for 30 minutes in advance to remove organic substances adsorbed on the powder surface.

(6) Content of aluminum element and iron element

The impurity concentration in the silicon powder was measured as follows. Silicon powder to be subjected to combustion synthesis reaction is weighed into a resin container, and high-purity concentrated nitric acid having a concentration of 70% is added thereto. After the silicon powder was completely dissolved by dropping high-purity hydrofluoric acid having a concentration of 50% while taking care not to excessively increase the decomposition reaction of silicon, the mixed acid of nitric acid and hydrofluoric acid remaining in the resin container was completely evaporated on a hot plate, and the heavy metal component adsorbed on the inner surface of the resin container was recovered with 1% dilute nitric acid. The resulting solution was subjected to inductively coupled plasma atomic emission spectrophotometer (ICP-AES) to quantify the heavy metal component. Here, iCAP 6500 DUO (manufactured by Thermo Fisher Scientific K.K.) was used.

The impurity concentration in the silicon nitride powder was measured using the method specified in JIS R 1603:2007.

In Examples and Comparative Examples, the following raw material powders were used.

<Raw material powder>

(Silicon powder)

Silicon powder obtained by pulverizing high-purity polycrystalline silicon of a solar cell application class to an average particle diameter of about 5 $\mu$m using an air flow grinder (jet mill) lined with silicon nitride was used. The oxygen amount of the obtained silicon powder was about 0.3% by mass. In addition, as the amounts of impurities, Fe was 10 ppm and Al was 5 ppm.

(Diluent)

Silicon nitride powder having an average particle diameter of 1 pm was used.

<Material of heat insulating layer>

(i) Silicon nitride powder A having an average particle diameter of 1 pm was used for forming a powdery heat insulating layer.

(ii) A sintered body B of silicon nitride powder having an average particle diameter of 1 pm was used for forming a plate-shaped heat insulating layer. The sintered body B was in the form of a plate having a thickness of 10 mm, and provided with one or more holes having a size of about 1 mm and communicating with each other on the front and back sides thereof so as to allow air to pass therethrough, per 1 $cm^2$, thereby forming a porous plate.

(iii) A porous sintered body having a thickness of 10 mm and mainly composed of silicon nitride was used as a porous plate C. The apparent porosity of the porous plate C was 60%.

<Material of protective layer>

(iv) The same material as in (i) above was used for the powdery protective layer.

(v) For the formation of the plate-shaped protective layer, the same material as in (iii) above was used.

[Example 1]

Silicon powder and silicon nitride powder which is a diluent were mixed to obtain raw material powder (silicon: 80% by mass, $Si_3N_4$: 20% by mass). The raw material powder was filled in a reaction vessel to form a raw material powder layer having a thickness of 30 mm. Next, the above-described silicon nitride powder A was laminated on the entire surface of the raw material powder layer to form a heat insulating layer made of the powder and having a thickness of 10 mm. Subsequently, the reaction vessel was placed in a pressure-resistant closed reactor having an ignition device and a gas supply/discharge mechanism, and the pressure in the reactor was reduced to perform deaeration, and then nitrogen gas was supplied to perform nitrogen substitution. Thereafter, nitrogen gas was gradually supplied to raise the pressure to 0.7 MPa. When the predetermined pressure was reached (at the time of ignition), the bulk density of the raw material powder was 0.8 $g/cm^3$ and the bulk density of the heat insulating layer was 0.8 g/cm3.

Thereafter, an end portion of the raw material powder in the reaction vessel was ignited, and a combustion synthesis reaction was performed to obtain a massive product made of silicon nitride.

The obtained massive product was crushed to about 5 to 20 pm by rubbing each other, and then an appropriate amount was put into a vibration mill to perform fine pulverization for 6 hours. As the fine pulverizer and fine pulverizing method, conventional apparatuses and methods were used, but as a measure for preventing heavy metal contamination, urethane lining was applied to the inside of the pulverizer, and balls containing silicon nitride as a main agent were used as the grinding media. Immediately before the start of fine pulverization, 1% by mass of ethanol was added as a pulverizing aid, and fine pulverization was performed in a closed state of the pulverizer to obtain a silicon nitride powder. The amount of unreacted material and the deterioration of the reaction vessel were evaluated as shown in Table 1. The measurement results of the obtained silicon nitride powder were shown in Table 2.

[Example 2]

A raw material powder layer was formed in the same manner as in Example 1. Next, the above-described plate-shaped silicon nitride sintered body B having a thickness of 10 mm and having air-permeable holes was laminated as a heat insulating layer on the entire surface of the raw material powder layer. Subsequently, the reaction vessel was placed in a pressure-resistant closed reactor having an ignition device and a gas supply/discharge mechanism, and the pressure in the reactor was reduced to perform deaeration, and then nitrogen gas was supplied to perform nitrogen substitution. Thereafter, nitrogen gas was gradually supplied to raise the pressure to 0.7 MPa. When the predetermined pressure was reached (at the time of ignition), the bulk density of the raw material powder was 0.8 g/cm$^3$.

Thereafter, an end portion of the raw material powder in the reaction vessel was ignited, and a combustion synthesis reaction was performed to obtain a massive product made of silicon nitride.

The obtained massive product was crushed and finely pulverized in the same manner as in Example 1 to obtain a silicon nitride powder. The amount of unreacted material and the deterioration of the reaction vessel were evaluated as shown in Table 1. The measurement results of the obtained silicon nitride powder were shown in Table 2.

[Example 3]

A raw material powder layer was formed in the same manner as in Example 1. Next, a porous plate C having a thickness of 10 mm made of the above-described silicon nitride powder was laminated as a heat insulating layer on the entire surface of the raw material powder layer. Subsequently, the reaction vessel was placed in a pressure-resistant closed reactor having an ignition device and a gas supply/discharge mechanism, and the pressure in the reactor was reduced to perform deaeration, and then nitrogen gas was supplied to perform nitrogen substitution. Thereafter, nitrogen gas was gradually supplied to raise the pressure to 0.7 MPa. When the predetermined pressure was reached (at the time of ignition), the bulk density of the raw material powder was 0.8 g/cm$^3$.

Thereafter, an end portion of the raw material powder in the reaction vessel was ignited, and a combustion synthesis reaction was performed to obtain a massive product made of silicon nitride.

The obtained massive product was crushed and finely pulverized in the same manner as in Example 1 to obtain a silicon nitride powder. The amount of unreacted material and the deterioration of the reaction vessel were evaluated as shown in Table 1. The measurement results of the obtained silicon nitride powder were shown in Table 2.

[Example 4]

Silicon powder and silicon nitride powder which is a diluent were mixed to obtain raw material powder (silicon: 80% by mass, $Si_3N_4$: 20% by mass). The above-described silicon nitride powder A was introduced into the bottom surface of the reaction vessel to form a protective layer having a thickness of 10 mm on the entire bottom surface, and then the above-described raw material powder was filled in the reaction vessel to form a raw material powder layer having a thickness of 30 mm. Next, the above-described silicon nitride powder A was laminated on the entire surface of the raw material powder layer to form a heat insulating layer made of the powder and having a thickness of 10 mm. Subsequently, the reaction vessel was placed in a pressure-resistant closed reactor having an ignition device and a gas supply/discharge mechanism, and the pressure in the reactor was reduced to perform deaeration, and then nitrogen gas was supplied to perform nitrogen substitution. Thereafter, nitrogen gas was gradually supplied to raise the pressure to 0.7 MPa. When the predetermined pressure was reached (at the time of ignition), the bulk density of the raw material powder was 0.8 g/cm$^3$ and the bulk density of the heat insulating layer was 0.8 g/cm$^3$.

Thereafter, an end portion of the raw material powder in the reaction vessel was ignited, and a combustion synthesis reaction was performed to obtain a massive product made of silicon nitride.

The obtained massive product was crushed and finely pulverized in the same manner as in Example 1 to obtain a silicon nitride powder. The amount of unreacted material and the deterioration of the reaction vessel were evaluated as shown in Table 1. The measurement results of the obtained silicon nitride powder were shown in Table 2.

[Example 5]

Silicon powder and silicon nitride powder which is a diluent were mixed to obtain raw material powder (silicon: 80% by mass, $Si_3N_4$: 20% by mass). The entire side surface of the reaction vessel was covered with the plate-shaped porous plate C to form a protective layer on the side surface. Further, the above-described silicon nitride powder A was introduced into the bottom surface of the reaction vessel to form a protective layer having a thickness of 10 mm on the entire bottom surface. Then, the raw material powder was filled in a reaction vessel to form a raw material powder layer having a thickness of 30 mm. Next, the above-described silicon nitride powder A was laminated on the entire surface of the raw material powder layer to form a heat insulating layer made of the powder and having a thickness of 10 mm.

The reaction vessel was placed in a pressure-resistant closed reactor having an ignition device and a gas supply/discharge mechanism, and the pressure in the reactor was reduced to perform deaeration, and then nitrogen gas was supplied to perform nitrogen substitution. Thereafter, nitrogen gas was gradually supplied to raise the pressure to 0.7 MPa. When the predetermined pressure was reached (at the time of ignition), the bulk density of the raw material powder was 0.8 g/cm$^3$ and the bulk density of the heat insulating layer was 0.8 g/cm$^3$.

Thereafter, an end portion of the raw material powder in the reaction vessel was ignited, and a combustion synthesis reaction was performed to obtain a massive product made of silicon nitride.

The obtained massive product was crushed and finely pulverized in the same manner as in Example 1 to obtain a silicon nitride powder. The amount of unreacted material and the deterioration of the reaction vessel were evaluated as shown in Table 1. The measurement results of the obtained silicon nitride powder were shown in Table 2.

[Comparative Example 1]

Silicon powder and silicon nitride powder which is a diluent were mixed to obtain raw material powder (silicon: 80% by mass, Si$_3$N$_4$: 20% by mass). The raw material powder was filled in a reaction vessel to form a raw material powder layer having a thickness of 30 mm. Subsequently, the reaction vessel was placed in a pressure-resistant closed reactor having an ignition device and a gas supply/discharge mechanism, and the pressure in the reactor was reduced to perform deaeration, and then nitrogen gas was supplied to perform nitrogen substitution. Thereafter, nitrogen gas was gradually supplied and the pressure was raised to 0.7 MPa. When the predetermined pressure was reached (at the time of ignition), the bulk density of the raw material powder was 0.8 g/cm$^3$.

Thereafter, an end portion of the raw material powder in the reaction vessel was ignited, and a combustion synthesis reaction was performed to obtain a massive product made of silicon nitride.

The obtained massive product was crushed and finely pulverized in the same manner as in Example 1 to obtain a silicon nitride powder. The amount of unreacted material and the deterioration of the reaction vessel were evaluated as shown in Table 1.

Table 1

| | | Example 1 | Example 2 | Example 3 | Example 4 | Example 5 | Comparative Example 1 |
|---|---|---|---|---|---|---|---|
| Heat insulating layer | Presence or absence of heat insulating layer formation | Presence | Presence | Presence | Presence | Presence | Absence |
| | Thickness (mm) | 10 | 10 | 10 | 10 | 10 | - |
| | Form | Powder | Porous plate | Porous plate | Powder | Powder | - |

(continued)

| | | Example 1 | Example 2 | Example 3 | Example 4 | Example 5 | Comparative Example 1 |
|---|---|---|---|---|---|---|---|
| Protective layer | Presence or absence of protective layer formation | Absence | Absence | Absence | Presence | Presence | Absence |
| | Formation place of protective layer | - | - | - | Bottom surface | Bottom surface, Side surface | - |
| | Bottom protective layer thickness (mm) | 0 | 0 | 0 | 10 | 10 | 0 |
| | Side protective layer thickness (mm) | 0 | 0 | 0 | 0 | 10 | 0 |
| | Protective layer form | - | - | - | Powder | Bottom: Powder Side: Porous plate | - |
| Evaluation | Amount of unreacted material (%) | 5 | 10 | 7 | 2 | 1 | 50 |
| | Deterioration of reaction vessel | C | C | C | B | A | C |

Table 2

| | | Example 1 | Example 2 | Example 3 | Example 4 | Example 5 |
|---|---|---|---|---|---|---|
| Silicon nitride powder | Average particle diameter ($\mu$m) | 0.7 | 0.7 | 0.7 | 0.7 | 0.7 |
| | Specific surface area ($m^2$/g) | 12 | 12 | 12 | 12 | 12 |
| | $\beta$ phase ratio (%) | >99 | >99 | >99 | >99 | >99 |
| | Impurity concentration Fe (ppm) | 7 | 7 | 7 | 7 | 7 |
| | Impurity concentration Al (ppm) | 4 | 4 | 4 | 4 | 4 |

In the method shown in each Example in which a heat insulating layer was formed on the surface of a raw material powder layer to obtain silicon nitride by a combustion synthesis reaction, it was observed that the amount of unreacted material was reduced. Furthermore, it was found that deterioration of the reaction vessel can be prevented by providing a protective layer on the reaction vessel.

On the other hand, in Comparative Example 1, it was found that when the combustion synthesis reaction was performed without forming the heat insulating layer and the protective layer, the amount of unreacted material was large and the reaction vessel was deteriorated.

Reference Signs List

11: Reaction vessel
12: Raw material powder layer
13: Heat insulating layer
15: Hole
16: Protective layer

**Claims**

1. A method for producing a metal nitride by igniting a raw material powder containing a metal powder filled in a reaction vessel under a nitrogen atmosphere and propagating nitriding combustion heat generated by a nitriding reaction of the metal to the whole raw material powder, the method comprising forming a heat insulating layer made of a material having nitrogen permeability and inert to the nitriding reaction on an upper surface of a layer made of the raw material powder.

2. The method for producing a metal nitride according to claim 1, wherein the heat insulating layer is formed of a nitride powder of the same metal element as the metal powder.

3. The method for producing a metal nitride according to claim 1 or 2, wherein the raw material powder contains a diluent composed of a nitride powder of the same metal element as the metal powder.

4. The method for producing a metal nitride according to any one of claims 1 to 3, wherein the metal powder is a silicon powder.

5. The method for producing a metal nitride according to any one of claims 1 to 4, further comprising forming a protective layer made of a material inert to a nitriding reaction on at least one surface constituting an inner wall of the reaction vessel.

6. The method for producing a metal nitride according to claim 5, wherein the protective layer is formed on a bottom surface of the reaction vessel.

7. The method for producing a metal nitride according to claim 5 or 6, wherein the protective layer is formed on a side surface of the reaction vessel.

Fig. 1

11

13(13A)    12

12b    12a

Fig. 2

11

13B    12

Fig. 3

Fig. 4

Fig. 5

Fig. 6

Fig. 7

Fig. 8

<table>
<tr><td colspan="2" align="center">**INTERNATIONAL SEARCH REPORT**</td><td>International application No.<br>PCT/JP2020/044937</td></tr>
</table>

A. CLASSIFICATION OF SUBJECT MATTER
C01B 21/06(2006.01)i; C01B 21/064(2006.01)i; C01B 21/068(2006.01)i; C01B 21/072(2006.01)i
FI: C01B21/06 N; C01B21/064 D; C01B21/068 D; C01B21/072 B
According to International Patent Classification (IPC) or to both national classification and IPC

B. FIELDS SEARCHED

Minimum documentation searched (classification system followed by classification symbols)
C01B21/06; C01B21/064; C01B21/068; C01B21/072

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-162431 A (NATIONAL CHENG KUNG UNIVERSITY) 25 August 2011 (2011-08-25) claims, paragraph [0063], examples | 1-3, 5-7<br>4 |
| Y | JP 62-162608 A (KOIZUMI, Mitsue) 18 July 1987 (1987-07-18) claims, examples | 4 |
| P, X | JP 2020-111477 A (COMBUSTION SYNTHESIS CO., LTD.) 27 July 2020 (2020-07-27) claims, paragraphs [0043]-[0049], examples, drawings | 1-3, 5-7 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>12 January 2021 (12.01.2021) | Date of mailing of the international search report<br>26 January 2021 (26.01.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2020/044937

| Patent Documents referred in the Report | Publication Date | Patent Family | Publication Date |
|---|---|---|---|
| JP 2011-162431 A | 25 Aug. 2011 | TW 201127747 A | |
| JP 62-162608 A | 18 Jul. 1987 | (Family: none) | |
| JP 2020-111477 A | 27 Jul. 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009161376 A
- JP 10218612 A
- JP 2000264608 A
- WO 2018110565 A

**Non-patent literature cited in the description**

- **C. P. GAZZARA ; D. R. MESSIER.** *Ceram. Bull.,* 1977, vol. 56, 777-780